# EUROPEAN PATENT SPECIFICATION

(11) **EP 0 562 112 B1**
(45) Date of publication and mention of the grant of the patent: **24.01.1996**
(21) Application number: 91914200.0
(22) Date of filing: 09.08.1991
(51) Int. Cl.: C04B 28/18

(54) **HIGH-STRENGTH MOLDING OF CALCIUM SILICATE AND PRODUCTION THEREOF**
HOCHFESTER FORMKÖRPER AUS KALZIUMSILIKAT UND SEINE HERSTELLUNG
MATERIAU MOULE TRES RESISTANT A BASE DE SILICATE DE CALCIUM ET PRODUCTION DE CE MATERIAU

(43) Date of publication of application: 29.09.1993
(73) Proprietor: Chichibu Onoda Cement Corporation, Minato-ku, Tokyo (JP)
(72) Inventor: NAKANO, Masayuki, Onoda Cement Co., Ltd., Koto-ku Tokyo 135 (JP); KURAMOTO, Ryozo, Onoda Cement Co., Ltd., Koto-ku Tokyo 135 (JP); OTOZAKI, Shigeo, Onoda Cement Co., Ltd., Koto-ku Tokyo 135 (JP); KANEKO, Katsuaki, Onoda Cement Co., Ltd., Koto-ku Tokyo 135 (JP); SHIBASAKI, Hideo, Onoda Cement Co., Ltd., Koto-ku Tokyo 135 (JP); TAMURA, Noritoshi, Onoda Cement Co., Ltd., Koto-ku Toko 135 (JP)
(74) Representative: von Bezold, Dieter, Dr.
(86) International application number: PCT/JP91/01069
(87) International publication number: WO 93/02986

(56) References cited:
- EP-A- 0 404 196
- JP-A-54 125 223
- JP-A-57 056 360
- US-A- 3 902 913
- CEMENT AND CONCRETE RESEARCH vol. 2, no. 3 , 1972 , PERGAMON PRESS, US pages 277 - 89 CRENNAN, J. M. ET AL 'Quantitative phase compositions of autoclaved cement-quartz cubes'
- CEMENT AND CONCRETE RESEARCH vol. 8, no. 1 , 1978 , PERGAMON PRESS,US pages 113 - 115 CHAN C.F. ET AL 'Formation of 14.ANG. tobermorite from mixtures of lime and colloidal silica and quartz'

## Description

Technical Field The present invention relates to a molding of calcium silicate having high strength useful for building materials. Background Art
A molding of calcium silicate, which is obtained by hydrothermally synthesizing calcareous material and siliceous material, has been widely used as building material having light weight, high strength, high heat resistance and non-combustibility properties. In recent years, such a molding of calcium silicate has been further improved to provide good bulk specific gravity, strength, grinding, cutting, polishing, screw-nail holding properties, and adhesive properties.

However, it is not easy to obtain a molding with the above-mentioned properties, which is similar to a natural timber. A matrix of xonotlite reinforced with glass fibers, is typically used as the above-mentioned type material. However, in such a material 5 to 10% by weight of synthetic resin is normally added to enhance adhesive strength, since the adhesive strength between glass fiber and xonotlite is low. High adhesion to the glass fiber was obtained and its bending strength was satisfactory. However, such a material was easily combustible, since a small amount of synthetic resin was present in the material. Also, heat resistance and incombustibility of such a material were low, and its workability was extremely low as compared with natural timbers. Disclosure of the Invention

According to the present invention a molding of calcium silicate having high strength, wherein glass fiber and pulp are dispersed and well anchored without the addition of synthetic resin, and which is also an incombustible building material similar to a natural timber is provided.
An object of the present invention is to provide a molding of calcium silicate having high strength, and comprising tobermorite, C - S - H, quartz and 2 to 10% by weight of glass fiber and pulp reinforcing material, with a Ti/Qi ratio of from 0.1 to 1.0 and density of from 0.3 to 0.7 g/cc, Ti and Qi being the intensity of the X-ray diffraction response of a tobermorite crystal (002) face and of a silica crystal (101) face, respectively in a powder X-ray diffraction analysis of the said molding. Moreover there is provided a method for manufacturing a molding of calcium silicate having high strength formed of calcareous material, siliceous material, and fibers as raw materials wherein the CaO/SiO₂ molar ratio is from 0.6 to 0.9, siliceous material comprising crystalline and amorphous silica in a weight ratio of amorphous silica to crystalline silica + amorphous silica is from 0.2 to 0.8, and the fibers are alkali resistant glass fibers and the pulp is present in the molding in an amount of from 2 to 10% by weight, comprising the steps of mixing calcareous material with at least a part of the amorphous silica so as to obtain a slurry at 50°C or less; heating said slurry to 80°C or more to be gelled; uniformly mixing said obtained gelled material with the remaining material including the alkali resistant glass fibers; dehydrating the obtained mixture under a pressure of from 3 to 30 kgf/cm² whereby a molding is obtained; heating and reacting said obtained molding in an autoclave; such that a Ti/Qi ratio of from 0.1 to 1.0 is obtained, Ti and Qi being the intensity of the X-ray diffraction response of a tobermorite crystal (002) face and of a silica crystal (101) face, respectively in a powder X-ray diffraction analysis of the said molding.

### Brief Description of the Drawings

Fig. 1 is an SEM (scanning electronic microscope) photograph showing a crystal structure of a molding of calcium silicate of Example 1 of the present invention;

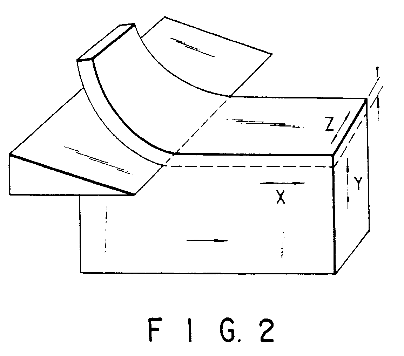

Fig. 2 depicts a method for testing grinding property of the molding of calcium silicate according to the present invention;
Fig. 3 is an SEM (Scanning Electron Microscope) photograph showing a crystal structure of a molding of calcium silicate of Example 5 of the present invention;
Fig. 4 is a powder X-ray diffraction chart of the molding of calcium silicate of Example 5;
Figs. 5(A), 5(B) and Figs. 6(A) and 6(B) are SEM photographs showing a broken surface of glass fiber and that of pulp when the molding of calcium silicate of Example 5 is bent and broken.

### Best Mode of Carrying Out the Invention

According to a first aspect of the invention, there is provided a molding of calcium silicate, glass fiber and pulp which is dispersed in and adheres to calcium silicate in which tobermorite, C - S - H and quartz are mixed. The glass fiber and pulp content ranges from 2 to 10%. If the content is below 2%, sufficient strength of the material cannot be obtained. If the content exceeds 10%, the strength of the material is not desirably improved.

Moreover, when powder X-ray diffraction of the calcium silicate molding is performed, the Ti/Qi ratio is 0.1 to 1.0, and the density is 0.3 to 0.7 g/cc wherein Ti and Qi show intensity of the X-ray diffraction of a tobermorite crystal (002) face and that of silica crystal (101) face, respectively. Therefore, it is required that strength of matrix of calcium silicate itself be high.

In order to obtain a material similar to natural timber when adding reinforcing materials to calcium silicate glass fiber is favourably used as the reinforcing material. However, in order to enhance strength of the calcium silicate base material by use of glass fiber, the following points are required. That is, strength of the matrix of calcium silicate itself must be high; adhesion strength of the matrix of calcium silicate to glass fiber must be high; and strength of calcium silicate is not reduced by the degradation of glass fibers serving as the reinforcing material.

Inventors of the present invention made various experiments and confirmed the following facts.

That is, in a case that the matrix of calcium silicate was formed of C - S - H and quartz, the strength of the matrix was low, and the adhesion strength of the matrix of calcium silicate to glass fiber was insufficient. As a result, glass fiber was drawn from the matrix in the case of bending breakage, and a desirable strength was not able to be obtained. Moreover, in a case that most of the matrix was formed of tobermorite crystal, the strength of glass fiber was lowered, and the matrix and glass fiber were simultaneously broken in the case of bending breakage, or glass fiber was broken before the breakage of the matrix. Therefore, a reinforcing effect of the glass fibers could not be observed. In contrast, in the case where tobermorite, C - S - H, and quartz were mixed into the matrix the glass fibers adhered to such a matrix, and the strength of the matrix was thus high, and both adhesion strength of the matrix of calcium silicate to glass fiber and the strength of glass fiber itself were high. Particularly, regarding the strength of the matrix, the Ti/Qi ratio (Ti and Qi are the same as the above) was 0.1 to 1.0, and the high strength was shown. Then, when the Ti/Qi ratio was out of the range of 0.1 to 1.0, the strength of the glass fiber was lowered.

Moreover, in order to improve working properties of the material such as the cutting, grinding, polishing, and screw-nail holding properties, 2 to 10% by weight of pulp must be adhered to the matrix. If the value is below 2%, no effect is brought about, and if the value is over 10%, incombustibility is considerably lowered.

In addition, if the density is below 0.3, a necessary screw-nail holding property cannot be expected. Moreover, if the density is over 0.7, it is difficult to perform nailing or cutting, grinding, and the like. Therefore, the absolute bulk density is set to 0.3 to 0.7 g/cc.

According to a second invention, there is provided a method for manufacturing the molding of calcium silicate of the first invention.

As calcareous material, hydrated lime, quicklime or milk of lime, as siliceous material, crystalline silica and amorphous silica and in a weight ratio of amorphous silica/(crystalline silica + amorphous silica) ranging from 0.2 to 0.8 may be used. Outside of this range, the high strength calcium silicate molding of the present invention cannot be obtained. As crystalline silica, normal silica powder can be used. As amorphous silica, preferably diatomaceous earth of grain size 50µm or less, or otherwise diatomaceous earth of other grain sizes, zeolite, or silica flour can be used. The CaO/SiO₂ molar ratio is set from 0.6 to 0.9 preferably from 0.7 to 0.85. Outside of this range, the product based on the object of the invention cannot be obtained. Moreover, if the value is below 0.6, generation of tobermorite becomes difficult. If the value is over 0.9, the glass fibers are eroded, so that a molding having the desired bending strength cannot be obtained.

As glass fiber, a chopped strand, which is obtained by cutting alkali resistant glass fiber to have a suitable length, may be used in an amount of 2 to 10% by weight. If less than 2% by weight is used, the desired reinforcing effect cannot be obtained. If more than 10% by weight is used, it is difficult to perform the molding process, and the reinforcing effect is not desirably increased. Pulp is also used together with glass fiber. The use of pulp improves the dispersion of the glass fibers, and greatly improves the processability and workability of the molding as well as their ability to reinforce. A normal timber pulp is used after being disaggregated in a wet manner or a dry manner. If less than 2% by weight of pulp is added, the desired reinforcing effect cannot be obtained and if more than 10% by weight pulp is added, incombustibility of the molding is considerably reduced, and the reinforcing effect is little improved.

Regarding the preparation, the calcareous material and at least a part of amorphous silica are mixed with water, and used as slurry. The residual amorphous silica is added later as is the crystalline silica.

Then, the ratio of the final amorphous silica ranges preferably from 0.2 to 0.8 at the amorphous silica/(crystalline silica + amorphous silica) ratio. Below this value, the gel strength of the gelled structure is too low, and the shape maintaining property is insufficient at the time of drawing the molding from a metal mold after the mixed materials are dehydrated and molded, and the handling of the molding becomes difficult. Moreover, if the value is too high, pressure rises too much at the time of drawing the molding from the metal mold, and this is unfavourable in view of the manufacturing of the molding. Regarding the addition of calcareous material to amorphous material, the CaO/SiO₂ molar ratio is preferably 0.8 or more. If the ratio is below 0.8, gelation hardly progresses. In this case all or the calcareous material may be added thereto. However, addition of the alkali resistant glass fiber is unfavourable since glass fiber is eroded by free lime. Regarding a water/solid weight ratio, there is no special limitation, but the value preferably ranges from 3 to 10. At such a water ratio, gelation advances sufficiently, and swelling of gel is within acceptable limits. The important point is when the materials are mixed the mixing is carried out at a temperature of 50°C or less. If the mixing is performed at a temperature of over 50°C, tobermorite formation is considerably delayed in the autoclave, and it is a possibility that the desired product cannot be obtained. The reason for this is as follows. A large amount of C - S - H, which is difficult to transfer to tobermorite, is generated if calcareous material and amorphous silica are mixed with each other at temperature of over 50°C. It is desirable that gelation be performed at 80°C under normal pressure. Though gel time is influenced by reactivity of amorphous silica, gel time is normally 1 to 5 hours. It is preferable that the gel is mixed intermittently.

The residual materials are then added to the above-obtained gel, and uniformly mixed. In this case, the above residual materials are all the materials which were not added before gelation and always include alkali resistant glass fiber. Though water is further added thereto, the water/solid weight ratio is not particularly limited. For uniformly mixing fiber material, the above water ratio preferably ranges from 2.0 to 4.0. As a mixer to be used in this case, a diffusion type mixer such as an omni type mixer is preferably used. Mixing time within 5 minutes is sufficient for this case. Thereafter, the mixture is introduced into the metal mold, pressurized and dehydrated before being molded. The pressure to be applied in this case is suitably 3 to 30 kgf/cm². If pressure is below 3 kgf/cm², the shape maintaining property after drawing the molding from the metal mold, is poor, and deformation is generated at the time of transferring. If the pressure is over 30 kgf/cm², layer-shape cracks are easily generated in the molding after the molding is pressurized and cured. A molding box can be arbitrarily used. However, the molding box having a thickness of 100 mm or less is preferably used since the uniformity of the reaction may be lost if the thickness is too large. The water/solid weight ratio of the obtained molding normally ranges from 1.0 to 3.0. In this case, the bulk density of the dried product is about 0.3 to 0.7 g/cc.

The above molding is then thermally reacted in an autoclave. The reaction is normally performed at a temperature of 140 to 200°C under saturated aqueous vapor conditions. If the temperature is below 140°C, generation of tobermorite is considerably delayed, and if the temperature is over 200°C, xonotlite is partially generated. Therefore, either condition is unfavourable since the strength of the product is less.

In view of economy and stability of the quality of the product, the reaction is preferably performed at a temperature of 160 to 195°C, and more preferably 170 to 190°C. The reaction time is adjusted to the condition that a Ti/Qi ratio of 0.1 to 1.0 is obtained. For example, in Examples 1 to 4 of the present invention, the reaction time is 3 to 8 hours in the case that the temperature is 180°C, 5 to 18 hours in the case that the temperature is 160°C, and 2 to 6 hours in the case that the temperature is 195°C. The present invention is, of course, not limited to the above temperatures and reaction times. After the cured molding is synthesized, the cured molding is dried, and a final product is obtained.

An explanation of Examples 1 to 4 and comparative examples 1 to 3 follows.

2.47 kg of quicklime powder was introduced into 8.65 kg of hot water having a temperature of 90°C, and slaked, so that milk of lime was obtained. The obtained milk of lime was cooled to a temperature of 32°C. Thereafter, 0.67 kg of diatomaceous earth fine powder (all less than 325 mesh) was added to the cooled milk of lime, and cold water was added thereto such that the water/solid weight ratio was set to 3.5, and was uniformly mixed. Thereafter, the mixture was heated in a warm bath, and gelled at a temperature of 80 to 92°C for two hours. After gelation, the gelled substance was cooled to 60°C. Then, 2.02 kg of silica powder (Toyane silica powder less than 250 mesh), 0.67 kg of diatomaceous earth powder, and 0.37 kg of alkali resistant glass fiber, and 0.37 kg of pulp were added thereto, and uniformly mixed for two minutes in the omni type mixer. The compositions of this mixture were as follows:
CaO/SiO₂ molar ratio ... 0.83
amorphous silica/(crystalline silica + amorphous silica) ... 0.4
alkali resistant glass fiber ... 5%
pulp ... 5%.

The mixture was introduced into the metal mold having an inner size of 610 * 1220 mm, and dehydrated at 12.0 kgf/cm² to obtain a molding. The thickness of the molding drawn from the metal mold was 18 mm. The molding was put in the autoclave and reacted for a predetermined time at a temperature of 180°C under saturated aqueous vapor conditions, taken out of the autoclave, and dried to absolute dryness at 105°C by a dryer. The bulk density of the dried product was 0.54 to 0.56 g/cc. The dimensions of the product were unchanged, that is, the product remained 610 * 1220 mm in size and 18 mm in thickness.

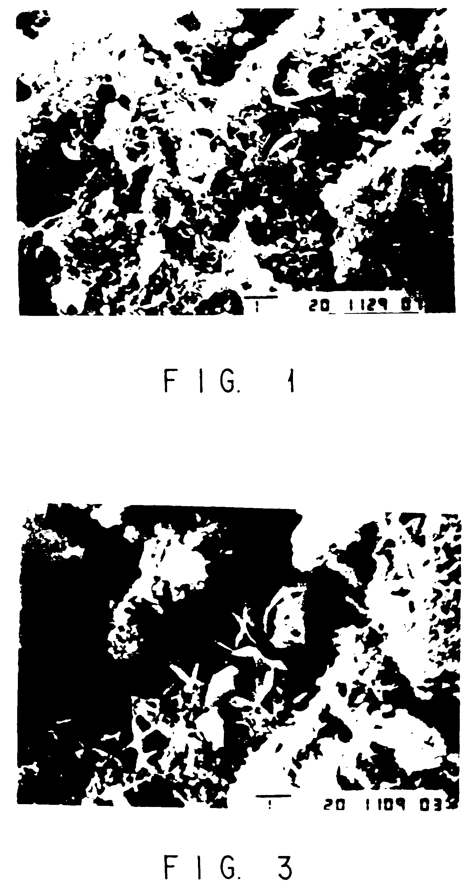

Fig. 1 shows an SEM photograph of Example 1. In the photograph, the entire surface of quartz is covered with C - S - H showing as a white agglomeration, and it can be seen that tobermorite is partially generated.

Table 1 shows the measured results of the physical properties of the products obtained according to Examples 1 to 4 and comparative examples 1 to 3.

In Table 1, the products shown in the comparative examples exhibit a Ti/Qi ratio outside of 0.1 to 1.0. The bending strengths shown in Table 1 were measured in accordance with JIS-A-1408. The size of the object to be measured was set to 80 mm width * 180 mm length * 15 mm thickness, and 100 mm span length . Combustibility was measured in accordance with JIS-A-1321.

Regarding the grinding, property, a sample of 50 mm length (X), 10 mm width (Z) and 50 mm thickness (Y) was cut from substantially close to the center of the aforementioned object. By the use of a blade with 28°, the object cut to a depth of 1 mm is abated at a cutting speed of 20 mm/min. In Table 1, the symbol o denotes a good grinding property in which abatement is continuous, * denotes a bad grinding, property in which abatement is discontinuous, and _ shows an intermediate grinding, property.

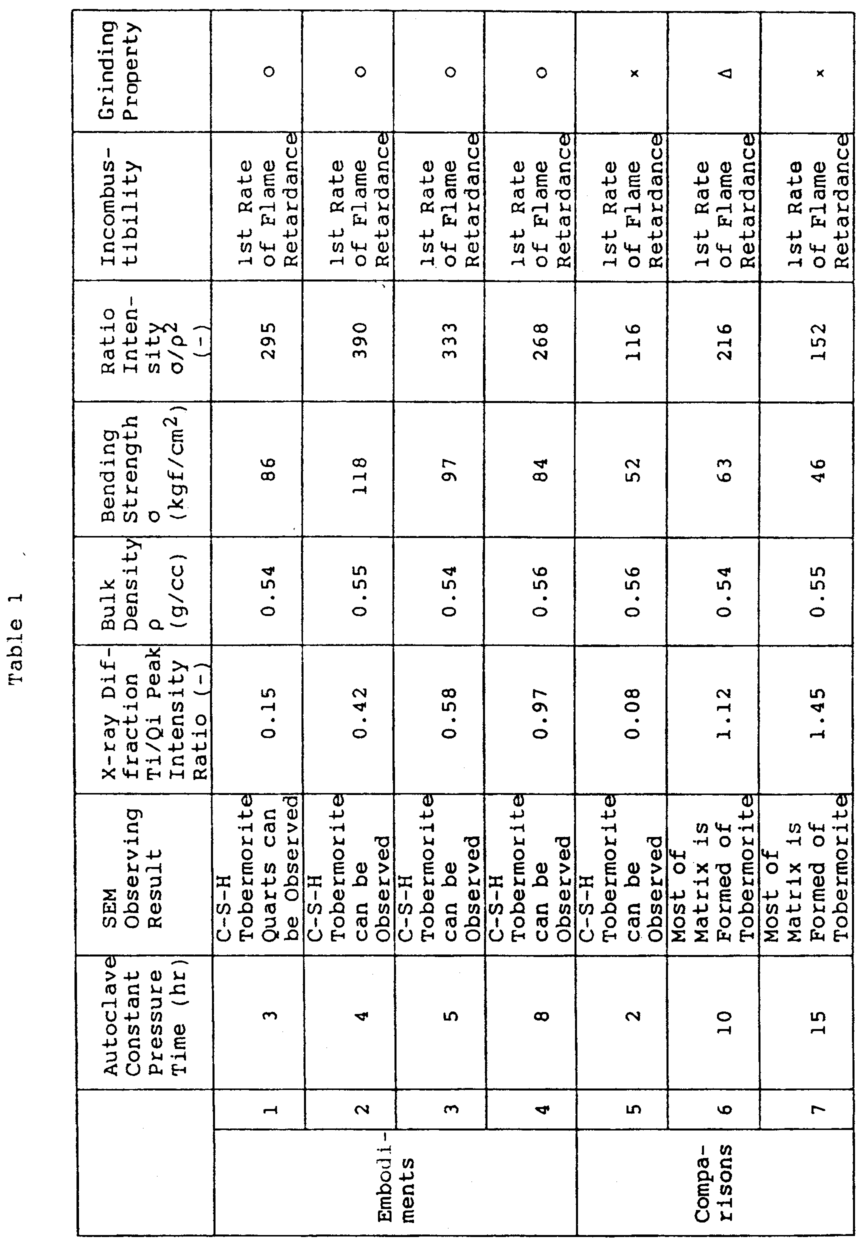

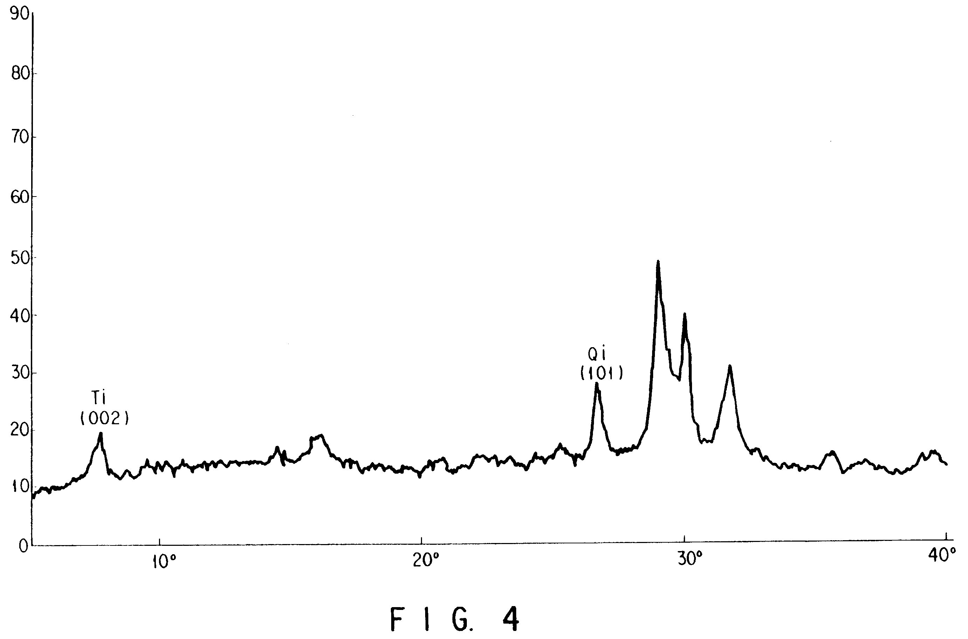

Example 5 will be explained as follows:
The product was obtained by the same method as Example 1 except that the reaction time in the autoclave was set to 5 hours 30 minutes. Fig. 3 shows an SEM photograph of the matrix of the molding of calcium silicate obtained in Example 5.

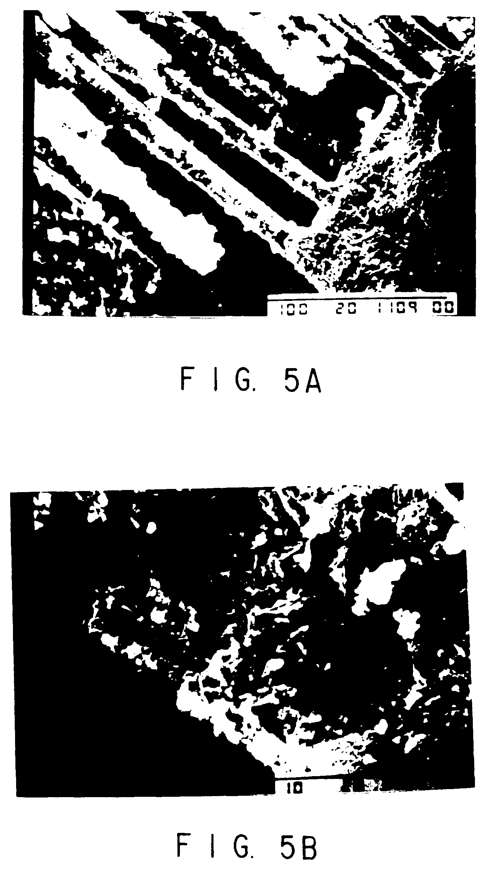

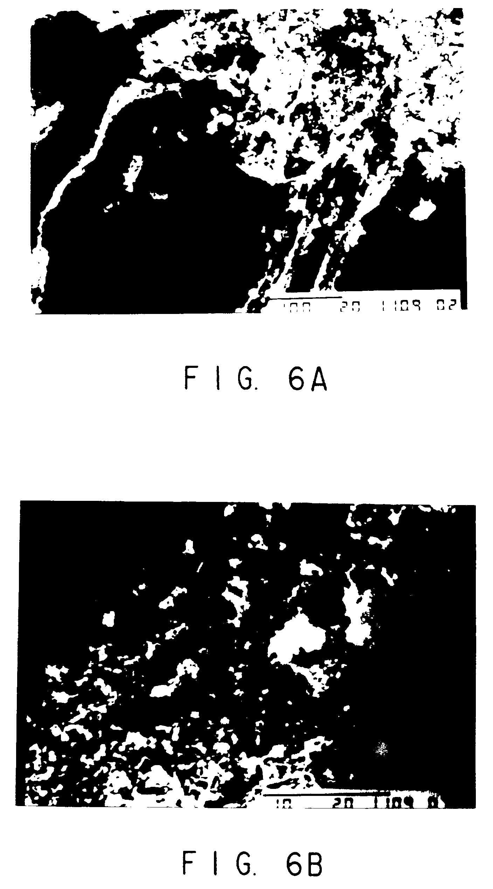

It can be understood from Fig. 3 that tobermorite and C - S - H are mixed with each other. Fig. 4 is a powder X-ray diffraction chart of the matrix of the molding of calcium silicate obtained in Example 5. As in Fig. 4, the peak of tobermorite and that of quartz are shown, and the intensity ratio of Ti/Qi was 0.64 wherein Ti = the (002) surface of tobermorite (2_ = 7.82°) and Qi = the (101) surface of quartz (2_ = 26.65°). Figs. 5(A), 5(B) and Figs. 6(A) and 6(B) are SEM photographs showing the broken surfaces of glass fiber and pulp when the molding of Example 5 is bent and broken.

More specifically, Fig. 5(A) shows the state of the surface of glass fiber when it is covered with a base material of calcium silicate. Fig. 5(B) shows one enlarged glass fiber, which is shown in Fig. 5(A). It can be understood from Fig. 5(B) that C - S - H and tobermorite strongly adhere to the surface of the glass fiber, thereby the base material and glass fiber strongly adhere to each other. Fig. 6(A) shows the same type of broken surface as Fig. 5(A). Specifically, Fig. 6(A) shows the state of the surface of the pulp when it is covered with a base material of calcium silicate. Fig. 6(B) shows an enlarged pulp, which is shown in Fig. 6(A). It can be understood from Fig. 6(B) that C - S - H and part of the tobermorite strongly adhere to the surface of the pulp, thereby the base material and pulp strongly adhere to each other.

The following will explain Examples 6 to 8 and comparative examples 4 to 6.

In Examples 6 to 8 and comparative examples 4 to 6, the product was obtained by the same method as in Example 4 except that the ratio of amorphous silica and the method of adding were changed. The results are shown in Table 2.

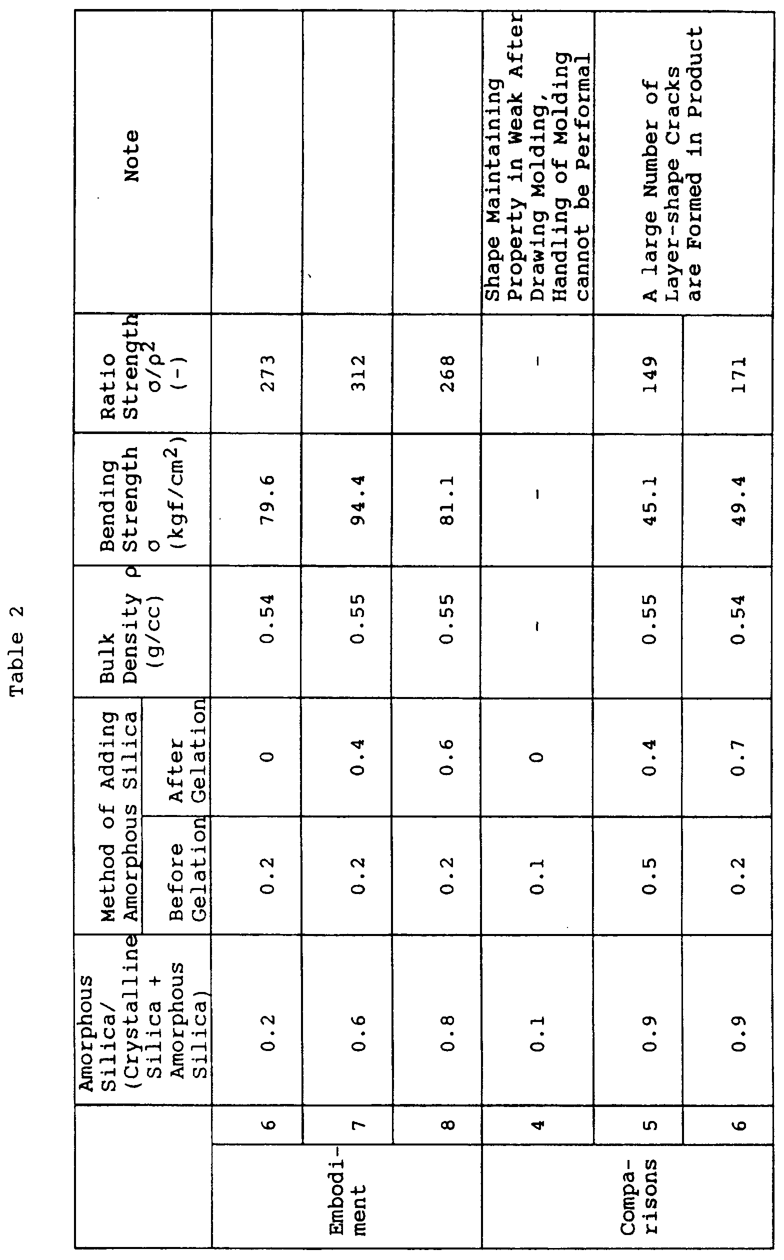

### Industrial Applicability

According to the present invention, the molding of calcium silicate having bulk density of 0.3 to 0.7 g/cc is light, and the strength ratio = (bending strength)/(bulk density)² is 260 or more. Also, workability such as cutting, grinding, polishing is much improved, with no dust generation, and the holding force of bisscrew is large. Furthermore, cracks, protrusions, and pores are not generated on the surface or inside the product, and the molding of the present invention has good incombustibility, heat resistance, and size stability , the molding of the present invention can be widely used as a material for walls, partitions, floors, heat insulations.

## Claims

1. A molding of calcium silicate having high strength, and comprising tobermorite, C - S - H, quartz and 2 to 10% by Weight of glass fiber and pulp reinforcing material, with a Ti/Qi ratio of from 0.1 to 1.0 and density of from 0.3 to 0.7 g/cc, Ti and Qi being the intensity of the X-ray diffraction response of a tobermorite crystal (002) face and of a silica crystal (101) face, respectively in a powder X-ray diffraction analysis of the said molding.

2. A method for manufacturing a molding of calcium silicate having high strength formed of calcareous material, siliceous material, and fibers as raw materials wherein the CaO/SiO₂ molar ratio is from 0.6 to 0.9, siliceous material comprising crystalline and amorphous silica in a weight ratio of amorphous silica to crystalline silica + amorphous silica is from 0.2 to 0.8, and the fibers are alkali resistant glass fibers and the pulp is present in the molding in an amount of from 2 to 10% by weight, comprising the steps of mixing calcareous material with at least a part of the amorphous silica and water so as to obtain a slurry at 50°C or less; heating said slurry to 80°C or more to be gelled; uniformly mixing said obtained gelled material with the remaining material including the alkali resistant glass fibers; dehydrating the obtained mixture under a pressure of from 3 to 30 kgf/cm² whereby a molding is obtained; heating and reacting said obtained molding in an autoclave; such that a Ti/Qi ratio of from 0.1 to 1.0 is obtained, Ti and Qi being the intensity of the X-ray diffraction response of a tobermorite crystal (002) face and of a silica crystal (101) face, respectively in a powder X-ray diffraction analysis of the said molding.

## Patentansprüche

1. Formkörper hoher Festigkeit aus Kalziumsilikat, aufweisend Tobermorit, C - S - H, Quarz und 2 bis 10 Gew.% eines verstärkenden Materials aus Glasfasern und Pülpe, mit einem Ti/Qi-Verhältnis von 0,1 bis 1,0 und einer Dichte von 0,3 bis 0,7 g/cc, wobei Ti und Qi die Signalintensitäten der an einer Tobermorit-(002)-Kristallebene bzw. der an einer Silika-(101)-Kristallebene abgebeugten Röntgenstrahlung bei der Röntgenstrukturanalyse des Formkörpers sind.

2. Verfahren zur Herstellung eines Formkörpers hoher Festigkeit aus Kalziumsilikat, welcher aus kalkhaltigem Material und siliziumhaltigem Material und Fasern aus rohem oder unbearbeitetem Material geformt wird, wobei das molare Verhältnis CaO/SiO₂ im Bereich 0,6 bis 0,9 liegt, das siliziumhaltige Material kristallines und amorphes Silika oder Siliziumoxid enthält, wobei das Gewichtsverhältnis von amorphem Silika zu kristallinem + amorphem Silika in einem Bereich von 0,2 zu 0,8 liegt, und die Fasern alkaliresistente Glasfasern sind und die Pülpe in dem Formkörper in einer Menge von 2 bis 10 Gew.% vorhanden ist, und wobei das Verfahren die Schritte aufweist: Mischen des kalkhaltigen Materials mit mindestens einem Teil des amorphen Silika und Wasser zur Zubereitung eines Breis bei 50°C oder weniger; Erhitzen des Breis auf 80°C oder mehr um diesen zu gelieren; gleichförmiges Mischen des zubereiteten gelierten Materials mit dem übrigen Material einschließlich der alkaliresistenten Glasfasern; Dehydrieren der zubereiteten Mixtur unter einem Druck in einem Bereich von 3 bis 30 kgf/cm², wobei der Formkörper hergestellt wird; Erhitzen und Reagierenlassen des hergestellten Formkörpers in einer Autoklave; solchermaßen, daß ein Ti/Qi-Verhältnis in einem Bereich von 0,1 bis 1,0 erhalten wird, wobei Ti und Qi die Signalintensitäten der an einer Tobermorit-(002)-Kristallebene bzw. der an einer Silika-(101)-Kristallebene abgebeugten Röntgenstrahlung bei der Röntgenstrukturanalyse des Formkörpers sind.

## Revendications

1. Matériau moulé à base de silicate de calcium, présentant une résistance élevée et comprenant de la tobermorite, du C - S - H, du quartz et 2 à 10% en poids d'un matériau de renforcement constitué de fibres de verre et de pâte, ledit matériau moulé présentant un rapport Ti/Qi de 0,1 à 1,0 et une masse volumique de 0,3 à 0,7 g/cm³, Ti et Qi désignant respectivement l'intensité de la raie de diffraction des rayons X correspondant à la face (002) d'un cristal de tobermorite et l'intensité de la raie de diffraction des rayons X correspondant à la face (101) d'un cristal de silice, que l'on obtient lorsqu'on analyse ledit matériau moulé par diffraction des rayons X par une poudre.

2. Procédé de fabrication d'un matériau moulé à base de silicate de calcium, présentant une résistance élevée, formé à partir de matière calcaire, de matière siliceuse et de fibres comme matières premières, procédé dans lequel le rapport molaire CaO/SiO₂ est de 0,6 à 0,9, la matière siliceuse comprend de la silice cristalline et de la silice amorphe selon un rapport en poids de la silice amorphe à la somme silice cristalline + silice amorphe de 0,2 à 0,8, les fibres sont des fibres de verre résistant aux alcalis et de la pâte est présente dans le matériau moulé à raison de 2 à 10% en poids, ledit procédé comprenant les étapes consistant à mélanger la matière calcaire avec au moins une partie de la silice amorphe et de l'eau, de façon à obtenir une bouillie, à une température inférieure ou égale à 50°C, à chauffer ladite bouillie à une température supérieure ou égale à 80°C pour la gélifier, à mélanger uniformément ladite matière gélifiée obtenue avec les matières restantes comprenant les fibres de verte résistant aux alcalis, à déshydrater le mélange obtenu sous une pression de 3 à 30 kgf/cm², ce qui permet d'obtenir un matériau moulé, à chauffer et faire réagir ledit matériau moulé obtenu dans un autoclave, de telle façon qu'un rapport Ti/Qi de 0,1 à 1,0 est obtenu, Ti et Qi désignant respectivement l'intensité de la raie de diffraction des rayons X correspondant à la face (002) d'un cristal de tobermorite et l'intensité de la raie de diffraction des rayons X correspondant à la face (101) d'un cristal de silice, que l'on obtient lorsqu'on analyse ledit matériau moulé par diffraction des rayons X par une poudre.
